(19) Europäisches Patentamt
European Patent Office
Office européen des brevets

(11) EP 0 992 388 B1

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.$^7$: **B60K 31/04**, B60K 41/20

(21) Anmeldenummer: **99117741.1**

(22) Anmeldetag: **09.09.1999**

(54) **Verfahren und Einrichtung zur Regelung der Längsdynamik eines Kraftfahrzeuges**

Method and apparatus for controlling the propulsion of a motor vehicle

Procédé et dispositif de commande du déplacement d'un véhicule à moteur

(84) Benannte Vertragsstaaten:
**DE FR GB IT**

(30) Priorität: **10.10.1998 DE 19846820**

(43) Veröffentlichungstag der Anmeldung:
**12.04.2000 Patentblatt 2000/15**

(73) Patentinhaber: DaimlerChrysler AG
70567 Stuttgart (DE)

(72) Erfinder:
• **Fritz, Hans, Dr.**
**73061 Ebersbach/Fils (DE)**
• **Gehring, Ottmar**
**70374 Stuttgart (DE)**

(56) Entgegenhaltungen:
EP-A- 0 813 987    DE-A- 4 306 086
DE-A- 4 338 399    DE-A- 19 632 337
US-A- 4 870 584

• **PREUSS: "METHODEN DER NICHTLINEAREN MODELLIERUNG - VOM INTERPOLATIONSPOLYNOM ZUM NEURONALEN NETZ " AUTOMATISIERUNGSTECHNIK - AT, Bd. 42, Nr. 10, Oktober 1994 (1994-10), Seite 449-457 XP000480006 München, DE ISSN: 0178-2312**

**Beschreibung**

Die Erfindung bezieht sich auf ein Verfahren und eine Einrichtung zur Regelung der Längsdynamik eines Kraftfahrzeuges nach dem Oberbegriff des Anspruchs 1 bzw. 5.

Ein Verfahren und eine Einrichtung dieser Art sind aus der Offenlegungsschrift DE 196 32 337 A1 bekannt. Beim dortigen System wird die Längsdynamik anhand eines Antriebsstrang-Stellsignals und optional zusätzlich eines Bremsanlagen-Stellsignals geregelt, wobei die beiden Stellsignale von einem zweistufigen Längsdynamikregler erzeugt werden, der eine erste Stufe zur Ermittlung reglerinterner Werte für die Soll-Längsgeschwindigkeit und die Soll-Längsbeschleunigung und eine dieser nachgeschaltete, zweite Stufe umfaßt, die aus den zugeführten reglerinternen Soll-Längsgeschwindigkeitswerten und Soll-Längsbeschleunigungswerten sowie zugeführten Eingangsdaten über den Ist-Fahrzustand das Antriebsstrang-Stellsignal und optional das Bremsanlagen-Stellsignal anhand eines inversen Fahrzeuglängsdynamikmodells errechnet. Das hierfür zugrundegelegte Fahrzeuglängsdynamikmodell beinhaltet eine Motormodellierung, die aus einem zugeführten Antriebsstang-Stellsignal das vom Motor abgegebene Motormoment und die Motordrehzahl als Eingangsgrößen für eine nachgeschaltete Automatikgetriebe- und Hinterachsen-Modelleinheit bestimmt. Letztere ermittelt daraus ein an den Antriebsrädern anliegendes Radantriebsmoment und die zugehörige Raddrehzahl. Parallel dazu bestimmt eine Bremsanlagen-Modelleinheit aus dem zugeführten Bremsanlagen-Stellsignal ein zugehöriges Bremsmoment. Die Automatikgetriebe- und Hinterachsen-Modelleinheit beinhaltet eine Modellierung eines Drehmomentwandlers und eines Stufengetriebes, wobei der Drehmomentwandler als hydrodynamische Kupplung angenommen ist, bei der die Momente durch eine Flüssigkeit zwischen Pumpen- und Turbinenrad übertragen werden.

Gegenüber anderen herkömmlichen Systemen, wie z.B. eines in der Offenlegungsschrift DE 43 38 399 A1 beschriebenen Systems, hat dieses System den Vorteil, daß es das nichtlineare Verhalten des Fahrzeugs besser berücksichtigt. Dieses ist insbesondere bei kleinen Fahrgeschwindigkeiten und bei größeren Fahrbahnlängsneigungen oder bei unterschiedlichen Fahrzeugbeladungen, speziell auch bei Lastkraftwagen, von nicht zu vernachlässigender Bedeutung, gerade auch in Abstandsregelsystemen, wie Abstandsregeltempomaten für mittlere und hohe Fahrgeschwindigkeiten sowie Stop&Go-Fahrzeugfolgesysteme für kleine Fahrgeschwindigkeiten, bei denen einem Abstandsregler ein Längsdynamikregelkreis unterlagert ist. Der überlagerte Abstandsregler bestimmt aus dem gemessenen Abstand und der Relativgeschwindigkeit eine Sollbeschleunigung für den unterlagerten Längsbeschleunigungsregelkreis. Die Abstandsregelung wird genauer, wenn der unterlagerte Regelkreis das nichtlineare Fahrzeugverhalten kompensiert, da dann für den Entwurf des Abstandsreglers von einem linearen Fahrzeugverhalten ausgegangen werden kann. Das System gemäß der DE 196 32 337 A1 trägt zwar diesen Anforderungen Rechnung, es setzt jedoch voraus, daß ein genügend genaues inverses Fahrzeuglängsdynamikmodell vorhanden ist oder erstellt werden kann. Dies ist jedoch nicht in allen Fällen gewährleistet. Zudem erfordert diese bekannte Vorgehensweise verhältnismäßig viel Rechenleistung im laufenden Betrieb für die Berechnungen innerhalb des inversen Fahrzeuglängsdynamikmodells.

Die EP 0 813 987 A2 beschreibt ein Verfahren zur Abstandsregelung für ein Kraftfahrzeug, bei dem über Sensoreinrichtungen zumindest die momentane Ist-Fahrgeschwindigkeit des Kraftfahrzeuges und der momentane Abstand zu einem vor dem Kraftfahrzeug befindlichen Objekt ermittelt werden und aus den erfaßten Größen mittels eines Operators eine abstandsabhängige Soll-Beschleunigung gebildet wird. Aus einer vom Fahrer vorgebbaren Wunschgeschwindigkeit wird eine geschwindigkeitsabhängige Sollbeschleunigung ermittelt und zu der abstandsabhängigen Soll-Beschleunigung in Beziehung gesetzt. In Abhängigkeit der erzeugten Soll-Beschleunigung wird anhand eines Fahrlängsdynamik-Reglers eine Stellgröße für die Antriebsmaschine und/oder die Bremsanlage des Kraftfahrzeuges ermittelt. Die Eingangsgrößen des Fuzzy-Reglers weisen neben der gemessenen Ist-Geschwindigkeit und dem Reibwert eine Regeldifferenz zwischen der Soll-Beschleunigung und einem momentanen Ist-Beschleunigungswert auf, was wiederum einen erheblichen Rechenaufwand zur Folge hat.

Der Erfindung liegt als technisches Problem die Bereitstellung eines Verfahrens und einer Einrichtung der eingangs genannten Art zugrunde, mit denen sich das nichtlineare Fahrzeuglängsdynamikverhalten für die Längsdynamikregelung mit zufriedenstellender Genauigkeit berücksichtigen läßt und die hierzu vergleichsweise wenig Rechenaufwand erfordern.

Die Erfindung löst dieses Problem durch die Bereitstellung eines Verfahrens mit den Merkmalen des Anspruchs 1 sowie einer Einrichtung mit den Merkmalen des Anspruchs 5. Bei diesem Verfahren und dieser Einrichtung wird das Antriebsstrang-Stellsignal und optional das Bremsanlagen-Stellsignal aus Ist-Fahrzustandsdaten sowie aus den reglerinternen Soll-Längsbeschleunigungswerten und Soll-Längsgeschwindigkeitswerten anhand eines inversen Fahrzeuglängsdynamik-Kennfeldes bestimmt. Ein solches Kennfeld kann beispielsweise vorab anhand entsprechender Probefahrten aus währenddessen aufgenommenen Meßdaten erstellt werden. Im laufenden Fahrbetrieb erfordert die Heranziehung eines solchen inversen Fahrzeuglängsdynamik-Kennfeldes deutlich weniger Rechenaufwand als die Benutzung eines inversen Fahrzeuglängsdynamikmodells. Zudem erfordert diese Vorgehensweise keine Kenntnis über das Verhalten oder den aktuellen Zustand eines Getriebe-Drehmomentwandlers und des Motors. Vielmehr wird aus den zugeführten Eingangsdaten, wie solche über den Ist-Fahrzustand und über die reglerinternen Soll-Längsgeschwindigkeitswerte und Soll-Längsbeschleunigungswerte, ein Soll-Antriebsstrangstellsignal bestimmt, aus dem dann das Antriebsstrang-Stellsignal abgeleitet wird.

Bei einem nach Anspruch 2 weitergebildeten Verfahren beinhalten die berücksichtigten Ist-Fahrzustandsdaten Daten über die Getriebeübersetzung, die Fahrzeugmasse und/oder die Fahrbahnsteigung. Damit können entsprechende Einflüsse einer momentan eingelegten Getriebeschaltstufe, der momentanen Fahrzeugbeladung bzw. der momentanen Fahrbahnneigung adäquat für die Bestimmung des Antriebsstrang-stellsignals berücksichtigt werden.

Bei einem nach Anspruch 3 weitergebildeten Verfahren ist eine Begrenzung des reglerinternen Soll-Längsgeschwindigkeitswertes, der aus der Soll-Längsbeschleunigung und der Ist-Längsgeschwindigkeit bestimmt wird, auf ein vorgebbares Toleranzband um die Ist-Längsgeschwindigkeit vorgesehen. Dies vermeidet unerwünscht hohe, ruckartige Beschleunigungen bei größeren Geschwindigkeitsabweichungen.

Bei dem nach Anspruch 4 weitergebildeten Verfahren und der nach Anspruch 6 weitergebildeten Einrichtung wird zusätzlich zum Antriebsstrang-Stellsignal auch ein Bremsanlagen-Stellsignal bestimmt, wobei beide Stellsignale aus dem Soll-Antriebsstrangstellsignal des inversen Fahrzeuglängsdynamik-Kennfeldes in vorteilhafter Weise so abgeleitet werden, daß in jeder Situation der Antriebsstrang oder die Bremsanlage geeignet aktiviert werden.

Eine vorteilhafte Ausführungsform der Erfindung ist in den Zeichnungen dargestellt und wird nachfolgend beschrieben. Hierbei zeigen:

Fig. 1 ein schematisches Blockdiagramm einer Einrichtung zur Regelung der Längsdynamik eines Kraftfahrzeuges mit zweistufigem, ein inverses Fahrzeuglängsdynamik-Kennfeld beinhaltendem Regler,

Fig. 2 ein schematisches Blockdiagramm des dem Regler von Fig. 1 zugrundeliegenden Fahrzeuglängsdynamik-Kennfeldes,

Fig. 3 ein schematisches Blockdiagramm der zweiten der zwei hintereinandergeschalteten Stufen des Reglers von Fig. 1 und

Fig. 4 ein Flußdiagramm zur Veranschaulichung einer in der zweiten Stufe des Längsdynamikreglers von Fig. 1 realisierten Zug-Schub-Umschaltung.

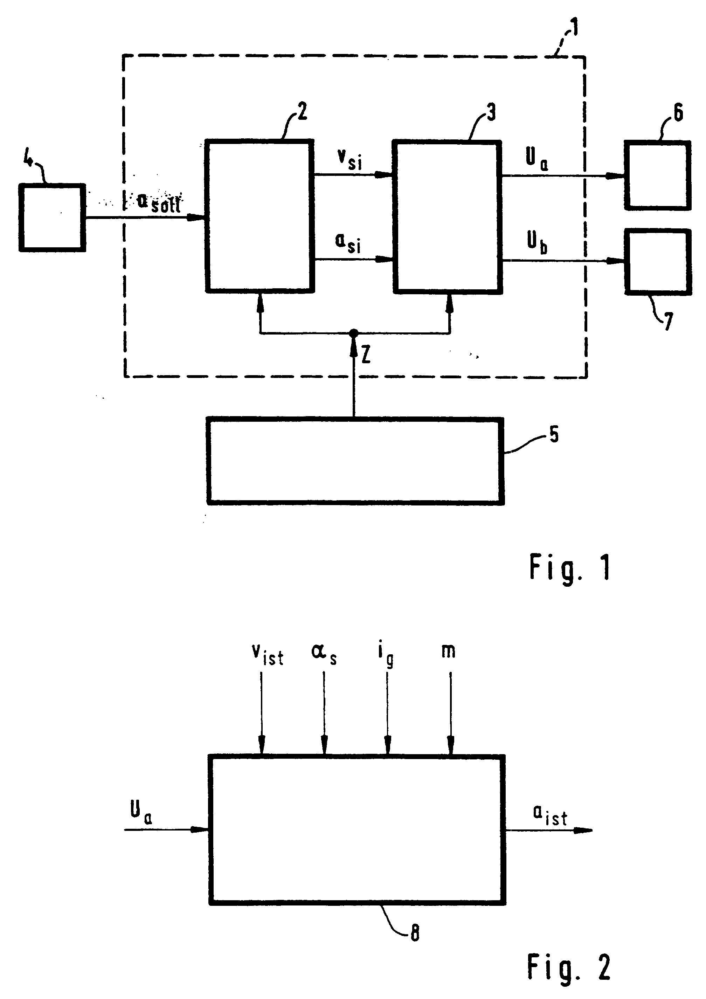

Die in Fig. 1 dargestellte Einrichtung zur Regelung der Längsdynamik eines Kraftfahrzeuges, speziell zur Fahrbeschleunigungsregelung, enthält eine gestrichelt umrahmt angedeutete Regeleinrichtung 1, die zweistufig aufgebaut ist. In einer ersten, überlagerten Stufe 2 ist ein geeigneter Regelalgorithmus implementiert, während in einer nachgeschalteten, unterlagerten zweiten Stufe 3 ein inverses Fahrzeuglängsdynamik-Kennfeld -Kennfeld implementiert ist. Dem Regler 1 ist eine Sollwerteingabeeinheit 4 vorgeschaltet, die einen vom Fahrer oder von einem überlagerten Abstandsregelkreis vorgegebenen, zeitlich veränderlichen Längsbeschleunigungs-Sollwert $a_{soll}$ an die Regeleinrichtung 1 weitergibt.

Beiden Reglerstufen 2, 3 werden von einer entsprechenden Sensorik 5 Informationen Z über den momentanen Fahrzustand, d.h. den Fahrzeugbetriebszustand, zugeführt. Zu diesen Informationen zählen wenigstens eine der Größen Ist-Fahrgeschwindigkeit $v_{ist}$, Motordrehzahl $n_m$ und Getriebeübersetzung $i_g$ eines im Fahrzeug vorhandenen Schalt- oder Automatikgetriebes sowie vorzugsweise zusätzlich die Größen Ist-Längsbeschleunigung $a_{ist}$, Ist-Fahrbahnsteigung $\alpha_s$ und Fahrzeugmasse m.

Die den Regelalgorithmus enthaltende erste Reglerstufe 2 liefert aus den zugeführten Eingangsgrößen eine reglerinterne Soll-Fahrgeschwindigkeit $v_{si}$ und eine reglerinterne Soll-Längsbeschleunigung $a_{si}$. Diese beiden reglerinternen Sollwerte werden der nachfolgenden Reglerstufe 3 zugeführt, die das inverse Fahrzeuglängsdynamik-Kennfeld enthält. Die zweite Reglerstufe 3 bestimmt daraus unter Berücksichtigung der ihr von der Sensorik 5 zugeführten Fahrzustandsinformationen Z zum einen ein Antriebsstrang-Stellsignal $U_a$, das einem Antriebsstrangstellglied 6 zugeführt wird, und zum anderen ein Bremsanlagen-Stellsignal $U_b$, das einem Bremsanlagenstellglied 7 zugeführt wird.

Im Längsbeschleunigungsregler 1 kann in der ersten Reglerstufe 2 ein Regelalgorithmus implementiert sein, bei welchem die reglerinterne Soll-Längsbeschleunigung $a_{si}$ der extern vorgegebenen Soll-Längsbeschleunigung $a_{soll}$ entspricht, d.h. $a_{si}=a_{soll}$, und sich die reglerinterne Soll-Fahrgeschwindigkeit $v_{si}$ als Summe der Ist-Längsgeschwindigkeit $v_{ist}$ und dem Produkt aus der extern zugeführten Soll-Längsbeschleunigung $a_{soll}$ mit einem entsprechend vorgebbaren Reglerparameter $T_a$ ergibt, d.h. $v_{si}=v_{ist}+T_a \cdot a_{soll}$.

Eine besonders vorteilhafte Ausführung sieht einen Regelalgorithmus vor, bei dem zuerst die Längsbeschleunigungs-Regeldifferenz $a_{diff}$, bestehend aus der Differenz zwischen der Soll-Längsbeschleunigung $a_{soll}$ und der Ist-Längsbeschleunigung $a_{ist}$, und dann eine reglerinterne Soll-Längsbeschleunigung $a_{si}$ aus der Summe von extern vorgegebener Soll-Längsbeschleunigung $a_{soll}$ und dem Proportional-, Integral- und Differential-Anteil der Längsbeschleunigungs-Regeldifferenz $a_{diff}$ gebildet werden. Unabhängig davon kann die reglerinterne Soll-Fahrgeschwindigkeit $v_{si}$ auch durch Integration der extern vorgebbaren Soll-Längsbeschleunigung $a_{soll}$ oder auch durch Integration der reg-

lerinternen Soll-Längsbeschleunigung $a_{si}$ gebildet werden, d.h. es gelten die Beziehungen:

$$a_{si}=a_{soll}+K_p \cdot a_{diff}+K_{ia} \cdot \Sigma(a_{diff})+K_d \cdot d(a_{diff})/dt,$$

$$v_{si}=K_{ia} \cdot \Sigma(a_{soll}) \text{ oder } v_{si}=K_{ia} \cdot \Sigma(a_{si}),$$

wobei $K_p$, $K_{ia}$, $K_d$ und $K_{ia}$ passend einzustellende Reglerparameter bezeichnen.

Des weiteren ist es vorteilhaft, die reglerinterne Soll-Fahrgeschwindigkeit $v_{si}$ in Abhängigkeit von der aktuellen Ist-Längsgeschwindigkeit $v_{ist}$ zu begrenzen. Hier kann ein Toleranzband-Parameter dv vorgegeben werden, mit dem die integrierte, reglerinterne Soll-Fahrgeschwindigkeit $v_{si}$ innerhalb des entsprechenden Toleranzbandes dv um den Wert der aktuellen Ist-Längsgeschwindigkeit $v_{ist}$ gehalten werden kann, d.h. daß die Soll-Fahrgeschwindigkeit $v_{si}$ auf den Maximalwert $v_{ist}$+dv gesetzt wird, wenn sie ansonsten darüberliegen würde, und auf den Minimalwert $v_{ist}$-dv gesetzt wird, wenn sie ansonsten darunterliegen würde. Dies vermeidet die Einstellung unerwünscht starker Beschleunigungen durch die Regelung.

Dem in der zweiten Reglerstufe 3 innerhalb einer entsprechenden Kennfeldeinheit implementierten inversen Fahrzeuglängsdynamik-Kennfeld $F^{-1}$ liegt ein mehrdimensionales Fahrzeuglängsdynamik-Kennfeld F einer entsprechenden Kennfeldeinheit 8 zugrunde, die blockdiagrammatisch in Fig. 2 mit ihren wesentlichen Eingangsund Ausgangsgrößen dargestellt ist. Wie aus Fig. 2 erkennbar, dienen als Eingangsgrößen dieser Kennfeldeinheit 8 das Antriebsstrang-Stellsignal $U_a$ sowie die den aktuellen Fahrzustands-Arbeitspunkt beschreibenden Größen Fahrgeschwindigkeit $v_{ist}$, Getriebeübersetzung $i_g$, Ist-Fahrbahnsteigung $\alpha_s$ und Fahrzeugmasse m. Das nicht-invertierte Fahrzeuglängsdynamik-Kennfeld F liefert daraus als Ausgangsgröße die zu diesem Arbeitspunkt gehörende Ist-Längsbeschleunigung $a_{ist}$, d.h. es gilt $a_{ist}=F(U_a,v_{ist},\alpha_s,i_g,m)$. Daraus läßt sich das Soll-Antriebsstrang-Stellsignal $U_{as}$ durch Invertierung gewinnen, d.h. aus dem inversen Fahrzeuglängsdynamik-Kennfeld $F^{-1}$ in der Form $U_{as}=F^{-1}(a_{si},v_{si},\alpha_s,i_g,m)$.

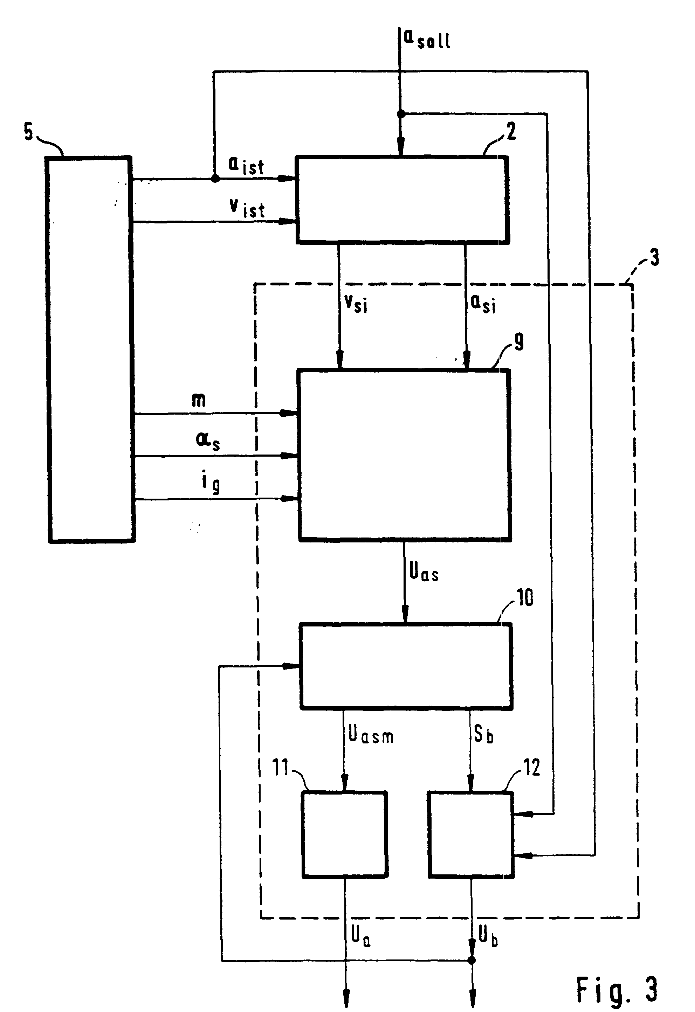

In Fig. 3 ist die zweite Reglerstufe 3 näher dargestellt. Wie daraus erkenntbar, enthält die zweite Reglerstufe 3 eingangsseitig eine Kennfeldeinheit 9 zur Bestimmung eines Soll-Antriebsstrangstellsignals $U_{as}$, eine dieser nachgeschaltete Einheit 10 zur Zug-/Schubbetriebsermittlung, die ein modifiziertes Soll-Antriebsstrangstellsignal $U_{asm}$ und ein binäres Bremsanlagen-Steuersignal $S_b$ generiert, und dieser nachgeschaltet parallel zueinander eine Antriebsstrang-Steuereinheit 11 und eine Bremsanlagen-Steuereinheit 12. Die Antriebsstrang-Steuereinheit 11 bestimmt das Antriebsstrang-Stellsignal $U_a$ in Abhängigkeit des zugeführten, modifizierten Soll-Antriebsstrangstellsignals $U_{asm}$, während die Bremsanlagen-Steuereinheit 12 in Abhängigkeit des binären Bremsanlagen-Steuersignals $S_b$ sowie der Ist-Längsbeschleunigung $a_{ist}$ und der von extern vorgegebenen Soll-Längsbeschleunigung $a_{soll}$ das Bremsanlagen-Stellsignal $U_b$ erzeugt.

Die eingangsseitige Kennfeldeinheit 9 der zweiten Reglerstufe 3 ermittelt in Abhängigkeit der ihr von der Sensorik 5 direkt oder über die vorgeschaltete, erste Reglerstufe 2 zugeführten Eingangssignale bzgl. Getriebeübersetzung $i_g$, Ist-Fahrbahnsteigung $\alpha_s$ und Fahrzeugmasse m ein zur reglerinternen Soll-Fahrgeschwindigkeit $v_{si}$ und zur reglerinternen Soll-Längsbeschleunigung $a_{si}$ gehöriges Soll-Antriebsstrangstellsignal $U_{as}$ durch Auswertung des in ihr implementierten, inversen Fahrzeuglängsdynamik-Kennfeldes $F^{-1}$.

Zur Erzeugung eines geeigneten Kennfeldes kann wie folgt vorgegangen werden. Zunächst werden in unterschiedlichen Meßfahrten mit Hilfe der entsprechenden Sensorik 5 die den Fahrzeugbetriebszustand beschreibenden Informationen Z, d.h. wenigstens zwei der Größen Ist-Fahrgeschwindigkeit $v_{ist}$, Motordrehzahl $n_m$, Getriebeübersetzung $i_g$, Ist-Längsbeschleunigung $a_{ist}$, Ist-Fahrbahnsteigung $\alpha_s$ und Fahrzeugmasse m, sowie das Antriebsstrang-Stellsignal $U_a$ meßtechnisch erfaßt und in Meßdateien abgespeichert. Es liegt dann zu jedem Meßzeitpunkt ein entsprechender Datensatz vor, welcher als Stützstelle zur Kennfelderzeugung verwendet werden kann.

Besonders vorteilhaft ist es, zur Erzeugung des Kennfeldes $a_{ist}=F(U_a,v_{ist},\alpha_s,i_g,m)$ bzw. des inversen Kennfeldes $U_{as}=F^{-1}(a_{si},v_{si},\alpha_s,i_g,m)$ eine Vorgehensweise zu verwenden, wie sie in dem Zeitschriftenartikel "Methoden der nichtlinearen Modellierung - vom Interpolationspolynom zum neuronalen Netz", Automatisierungstechnik 42, 1994 angegeben ist. Als alternative Vorgehensweise zur Erzeugung eines geeigneten Kennfeldes können herkömmliche neuronale Trainingsverfahren oder Fuzzy-Methoden eingesetzt werden. Das Kennfeld liegt dann als neuronales Netz oder als Fuzzy-Kennfeld vor. Das mehrdimensionale Kennfeld kann auch aus mehreren anderen Kennfeldern mit einer um eins verringerten Ordnung zusammengesetzt werden. Dies ist besonders bei Signalen vorteilhaft, die nur wenige diskrete Zustände einnehmen können. Beispielsweise kann für jeden Wert der Getriebeübersetzung ig ein separates Teil-Kennfeld des gesamten Kennfeldes erstellt werden.

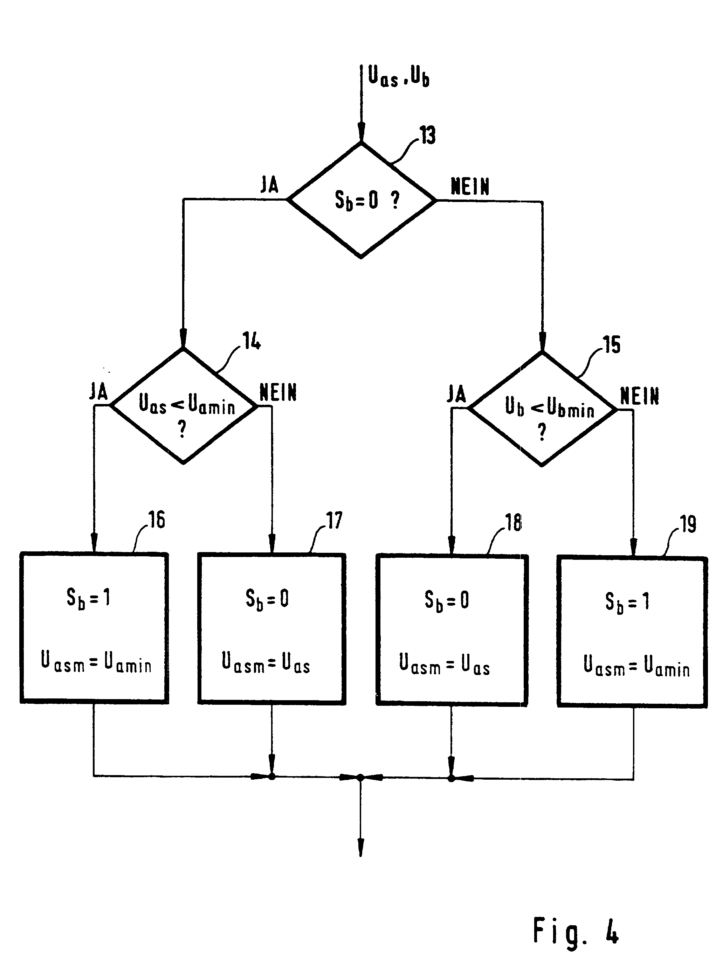

Das anhand des inversen Fahrzeuglängsdynamik-Kennfeldes $F^{-1}$ ermittelte Soll-Antriebsstrangstellsignal $U_{as}$ wird dann der nachgeschalteten Einheit 10 zugeführt, die verhindert, daß durch die Regelung gleichzeitig Gas gegeben und gebremst wird. Hierzu geht sie nach einem Verfahrensablauf vor, der in Fig. 4 näher dargestellt ist.

In einem ersten Abfrageschritt 13 prüft sie anhand des Wertes des binären Steuersignals $S_b$, ob kein Bremsvorgang aktiv ist, d.h. ob dieses binäre Steuersignal $S_b$ den Wert null hat. Ist dies der Fall, prüft sie in einem anschließenden Abfrageschritt 14, ob das von der Kennfeldeinheit 9 bestimmte Soll-Antriebsstrang-stellsignal $U_{as}$ kleiner als ein von der Antriebsstrang-Steuereinheit 11 wirksam realisierbares, minimales Stellsignal $U_{amin}$ ist. Ist dies der Fall, was bedeutet, daß das wirksame Schubmoment des Motors nicht zur gewünschten Fahrzeugverzögerung ausreicht, so wird in einem nächsten Schritt 16 das binäre Bremsanlagen-Steuersignal $S_b$ auf den Wert eins gesetzt, wodurch der Bremsanlagen-Steuereinheit 12 übermittelt wird, daß ein Bremsvorgang aktiviert werden soll. Gleichzeitig erhält das modifizierte Soll-Antriebsstrangstellsignal $U_{asm}$ den minimalen, wirksam realisierbaren Wert $U_{amin}$ des Antriebsstrang-Stellsignals.

Falls der Stellsignal-Abfrageschritt 14 verneinend entschieden wird, ist auch weiterhin keine Bremsung erforderlich, so daß das binäre Bremsanlagen-Steuersignal $S_b$ auf dem Wert null verbleibt und als modifiziertes Soll-Antriebsstrangstellsignal $U_{asm}$ das Soll-Antriebsstrangstellsignal $U_{as}$ unverändert weitergeleitet wird (Schritt 17). In diesem Fall reicht für eine eventuelle Bremsung die Motorbremsleistung aus.

Falls der Steuersignal-Abfrageschritt 13 verneinend entschieden wird, was bedeutet, daß ein Bremsvorgang aktiv ist, d.h. die Bremsanlage aktiviert ist, so wird in einem anschließenden Abfrageschritt 15 geprüft, ob das von der Bremsanlagen-Steuereinheit 12 ermittelte Bremsanlagen-Stellsignal $U_b$ kleiner als ein von ihr wirksam realisierbares, minimales Stellsignal $U_{bmin}$ ist. Zu diesem Zweck ist, wie in Fig. 3 dargestellt, das Bremsanlagen-Stellsignal $U_b$ zur Einheit 10 rückgeführt. Ist dies der Fall, was bedeutet, daß keine Bremswirkung mehr von der Bremsanlage benötigt wird, so wird in einem anschließenden Schritt 18 das Bremsanlagen-Steuersignal $S_b$ auf den Wert null gesetzt und damit der Bremsanlagen-Steuereinheit 12 übermittelt, daß der Bremsvorgang beendet werden soll. Gleichzeitig wird als modifiziertes Soll-Antriebsstrangstellsignal $U_{asm}$ das Soll-Antriebsstrangstellsignal $U_{as}$ unverändert weitergeleitet. Für eine eventuelle Bremswirkung reicht in diesem Fall wiederum die Motorbremswirkung aus.

Falls der Bremsanlagen-Stellsignalabfrageschritt 15 verneinend entschieden wird, was bedeutet, daß die von der Bremsanlagen-Steuereinheit 12 als gewünscht ermittelte Bremswirkung größer als die minimal von der Bremsanlage realisierbare Bremswirkung ist, so bleibt das binäre Bremsanlagen-Steuersignal $S_b$ auf dem Wert eins, d.h. die Bremsanlage bleibt weiterhin aktiv, und das modifizierte Soll-Antriebsstrangstellsignal $U_{asm}$ wird auf den Wert des minimalen Antriebsstrang-Stellsignals $U_{amin}$ gesetzt, d.h. die Motorbremse wird mit maximaler Wirkung eingesetzt.

Wie aus der obigen Erläuterung erkennbar, gewährleistet der in der der Einheit 10 zur Zug-/Schubbetriebsermittlung implementierte Algorithmus, daß von der Regelung nicht gleichzeitig Gas gegeben und gebremst wird und daß zum Bremsen des Fahrzeugs stets die Motorbremswirkung bestmöglich ausgenutzt und die Bremsanlage erst aktiviert wird, wenn die Motorbremswirkung nicht mehr ausreicht.

Insgesamt zeigt die vorstehende Beschreibung eines erfindungsgemäßen Ausführungsbeispiels und möglicher Modifikationen hiervon, daß durch die Erfindung ein Verfahren und eine Einrichtung zur Fahrzeuglängsdynamikregelung bereitgestellt werden, die das besonders im niedrigen Fahrgeschwindigkeitsbereich relevante, nichtlineare dynamische Verhalten des Kraftfahrzeugs bereits innerhalb der Längsdynamikregelung berücksichtigen und damit günstige Regelungseigenschaften gerade auch im niedrigen Fahrgeschwindigkeitsbereich bieten und die hierzu mit relativ wenig Rechenaufwand auskommen, indem sie ein vorab erstelltes inverses Fahrzeuglängsdynamik-Kennfeld verwenden.

**Patentansprüche**

1. Verfahren zur Regelung der Längsdynamik eines Kraftfahrzeuges, bei dem

   - ein Antriebsstrang-Stellsignal ($U_a$) aus Ist-Fahrzustandsdaten sowie aus reglerinternen, anhand von zugeführten Eingangsdaten über die Soll-Längsbeschleunigung ($a_{soll}$) und über den Ist-Fahrzustand ermittelten Soll-Längsgeschwindigkeitswerten ($v_{si}$) und Soll-Längsbeschleunigungswerten ($a_{si}$) abgeleitet wird,

   **dadurch gekennzeichnet, daß**

   - in Abhängigkeit von den reglerinternen Soll-Längsgeschwindigkeitswerten ($v_{si}$) und Soll-Längsbeschleunigungswerten ($a_{si}$) sowie von Ist-Fahrzustandsdaten anhand eines inversen Fahrzeuglängsdynamik-Kennfeldes (9) ein Soll-Antriebsstrangstellsignal ($U_{as}$) und daraus das Antriebsstrang-Stellsignal ($U_a$) bestimmt wird.

2. Verfahren nach Anspruch 1, weiter **dadurch gekennzeichnet, daß** die zur kennfeldbasierten Bestimmung des Soll-Antriebsstrangstellsignals ($U_{as}$) herangezogenen Ist-Fahrzustandsdaten Daten über die Getriebeübersetzung ($i_g$), die Fahrzeugmasse ($m$) und/oder die Fahrbahnsteigung ($\alpha_s$) umfassen.

3. Verfahren nach Anspruch 1 oder 2, weiter **dadurch gekennzeichnet, daß** die reglerinterne Soll-Längsgeschwindigkeit ($v_{si}$) in Abhängigkeit von der Soll-Längsbeschleunigung und der Ist-Längsgeschwindigkeit ($v_{ist}$) bestimmt und auf ein vorgebbares Toleranzband ($dv$) um die Ist-Längsgeschwindigkeit begrenzt wird.

4.  Verfahren nach einem der Ansprüche 1 bis 3, weiter **dadurch gekennzeichnet, daß** aus dem Soll-Antriebsstrangstellsignal ($U_{as}$) zusätzlich zum Antriebsstrang-Stellsignal ($U_a$) ein Bremsanlagen-Stellsignal ($U_b$) bestimmt wird, wobei aus dem Soll-Antriebsstrangstellsignal ($U_{as}$) und dem momentanen Bremsanlagen-Stellsignal ($U_b$) ein binäres, der Aktivierung oder Deaktivierung der Bremsanlage entsprechendes Bremsanlagen-Steuersignal ($S_b$) derart bestimmt wird, daß die Bremsanlage nur aktiviert wird, wenn eine Fahrzeugverzögerung erforderlich ist, die nicht allein durch Motorbremswirkung erzielbar ist.

5.  Einrichtung zur Regelung der Längsdynamik eines Kraftfahrzeuges, mit

    einer Längsdynamikregeleinrichtung (1), der eingangsseitig Daten über die Soll-Längsbeschleunigung ($a_{soll}$) und den Ist-Fahrzustand zugeführt werden und die ausgangsseitig ein Antriebsstrang-Stellsignal ($U_a$) abgibt, wobei

    die Längsdynamikregeleinrichtung (1) eine erste Stufe (2) zur Bestimmung reglerinterner Werte für die Soll-Längsbeschleunigung ($a_{si}$) und Soll-Längsgeschwindigkeit ($v_{si}$) und eine dieser nachgeschaltete, zweite Stufe (3) umfaßt, **dadurch gekennzeichnet, daß** die zweite stufe eine inverse Fahrzeuglängsdynamik-Kennfeldeinheit (9), welche aus den zugeführten reglerinternen Soll-Längsgeschwindigkeitswerten ($v_{si}$) und Soll-Längsbeschleunigungswerten ($a_{si}$) und zugeführten Ist-Fahrzustandsdaten anhand eines inversen Fahrzeuglängsdynamik-Kennfeldes ein Soll-Antriebsstrangstellsignal ($U_{as}$) ermittelt, sowie nachgeschaltete Einheiten (10, 11, 12) umfaßt, die aus dem Soll-Antriebsstrangstellsignal ($U_{as}$) das Antriebsstrang-Stellsignal ($U_a$) ableiten.

6.  Einrichtung nach Anspruch 5, weiter **dadurch gekennzeichnet, daß** der inversen Fahrzeuglängsdynamik-Kennfeldeinheit (9) eine Einheit (10) zur Zug-/Schubbetriebsermittlung nachgeschaltet ist, die aus dem zugeführten Soll -Antriebsstrangstellsignal ($U_{as}$) und einem rückgeführten Bremsanlagen-Stellsignal ($U_b$) ein modifiziertes Soll-Antriebsstrangstellsignal ($U_{asm}$) und ein binäres Bremsanlagen-Steuersignal ($S_b$) in Abhängigkeit von einem Vergleich zwischen dem Soll-Antriebsstrangstellsignal ($U_{as}$) und einem minimalen Antriebsstrang-Stellsignal ($U_{amin}$), von einem Vergleich zwischen dem Bremsanlagen-Stellsignal und einem minimalen Bremsanlagen-Stellsignal ($U_{bmin}$) sowie vom bisherigen Wert des binären Bremsanlagen-Steuersignals bestimmt.

**Claims**

1.  Method of controlling the linear dynamics of a motor vehicle in which

    - a drive train actuating signal ($U_a$) is derived from actual running status data together with controller-internal desired linear speed values ($v_{si}$) and desired linear acceleration values ($a_{si}$) determined with the aid of supplied input data relating to the desired linear acceleration ($a_{desired}$) and the actual running status,

    **characterized in that**

    - depending on the controller-internal desired linear speed values ($v_{si}$) and desired linear acceleration values ($a_{si}$) together with actual running status data, a desired drive train actuating signal ($U_{as}$) and from this the drive train actuating signal ($U_a$) is determined with the aid of an inverse vehicle linear dynamics map (9).

2.  Method according to claim 1, further **characterized in that** the actual running status data used for map-based determination of the desired drive train actuating signal ($U_{as}$) comprises data relating to the transmission ratio ($i_g$), the vehicle weight (m) and/or the road gradient ($\alpha_s$).

3.  Method according to claim 1 or 2, further **characterized in that** the controller-internal desired linear speed ($v_{si}$) is determined on the basis of the desired linear acceleration and the actual linear speed ($v_{actual}$) and is limited to a presettable tolerance band (dv) around the actual linear speed.

4.  Method according to any of claims 1 to 3, further **characterized in that** in addition to the a drive train actuating signal ($U_a$), a braking system actuating signal ($U_b$) is determined from the desired drive train actuating signal ($U_{as}$), while from the desired drive train actuating signal ($U_{as}$) and the current braking system actuating signal ($U_b$) a binary braking system control signal ($S_b$) corresponding to the activation or deactivation of the braking system is determined in such a way that the braking system is activated only when a vehicle deceleration is necessary which can not be obtained solely by the engine braking effect.

5.  Device for controlling the linear dynamics of a motor vehicle with a linear dynamics control device (1) which on the input side is fed with data on the desired linear acceleration ($a_{desired}$) and the actual running status and on the output side emits a drive

train actuating signal ($U_a$), wherein the linear dynamics control device (1) comprises a first stage (2) for determining controller-internal values for the desired linear acceleration ($a_{si}$) and desired linear speed ($v_{si}$), and a second stage (3) following the former, **characterized in that** the second stage comprises an inverse vehicle linear dynamics mapping unit (9) which determines a desired drive train actuating signal ($U_{as}$) from the supplied controller-internal desired linear speed values ($v_{si}$) and desired linear acceleration values ($a_{si}$) and supplied actual running status data, with the aid of an inverse vehicle linear dynamics map, together with downstream units (10, 11, 12) which derive the drive train actuating signal ($U_a$) from the desired drive train actuating signal ($U_{as}$).

6. Device according to claim 5, further **characterized in that**
the inverse vehicle linear dynamics mapping unit (9) is followed by a unit (10) to determine acceleration/deceleration which determines, from the supplied desired drive train actuating signal ($U_{as}$) and a re-supplied braking system actuating signal ($U_b$), a modified desired drive train actuating signal ($U_{asm}$) and a binary braking system control signal ($S_b$), on the basis of a comparison between the desired drive train actuating signal ($U_{as}$) and a minimum drive train actuating signal ($U_{amin}$), a comparison between the braking system control signal and a minimum braking system actuating signal ($U_{bmin}$), and the former value of the binary braking system control signal.

## Revendications

1. Procédé pour réguler la dynamique longitudinale d'un véhicule automobile, selon lequel:

   - un signal de réglage ($U_a$) de la chaîne motrice est dérivé de données de l'état de conduite réel ainsi que de valeurs de vitesse longitudinale de consigne ($v_{si}$) et de valeurs d'accélération longitudinale de consigne ($a_{si}$), qui sont contenues dans le régulateur et sont déterminées sur la base de données d'entrée envoyées, concernant l'accélération longitudinale de consigne ($a_{soll}$) et l'état de conduite réel, **caractérisé en ce que**
   - un signal de réglage de consigne ($U_{as}$) de la chaîne motrice est déterminé en fonction des valeurs de vitesse longitudinale de consigne ($v_{si}$) et des valeurs d'accélération longitudinale de cosigne ($a_{si}$), contenues dans le régulateur ainsi qu'en fonction de données d'état de conduite réel, sur la base d'un champ inverse (9) de caractéristiques de la dynamique longitudinale du véhicule, et que le signal de réglage ($U_a$) de la chaîne motrice est déterminé à partir de ce signal de réglage de consigne de la chaîne motrice.

2. Procédé selon la revendication 1, **caractérisé en outre en ce que** les données de l'état de conduite réel, utilisées pour la détermination, basée sur le champ de caractéristiques, du signal de réglage de consigne ($U_{as}$) de la chaîne motrice, comprennent des données concernant la démultiplication ($i_g$) de la boîte de vitesses, la masse ($m$) du véhicule et/ou la pente ($\alpha_s$) de la chaussée.

3. Procédé selon la revendication 1 ou 2, **caractérisé en outre en ce que** la vitesse longitudinale de consigne ($v_{si}$), contenue dans le régulateur, est déterminée en fonction de l'accélération longitudinale de consigne et de la vitesse longitudinale réelle ($v_{ist}$) et est limitée à une plage de tolérance pouvant être prédéterminée ($dv$) autour de la vitesse longitudinale réelle.

4. Procédé selon l'une des revendications 1 à 3, **caractérisé en outre en ce qu'**un signal de réglage ($U_b$) de l'installation de freinage est déterminé à partir du signal de réglage ($I_{as}$) de la chaîne motrice, en plus du signal de réglage ($U_a$) de la chaîne motrice, un signal binaire de commande ($S_b$) de l'installation de freinage, qui correspond à l'activation ou à la désactivation de l'installation de freinage, étant déterminé à partir du signal de réglage de consigne ($U_{as}$) de la chaîne motrice et du signal de réglage instantané ($U_b$) de l'installation de freinage, de telle sorte que l'installation de freinage ne soit activée que lorsqu'une décélération du véhicule est requise, décélération qui ne peut pas être obtenue uniquement par l'action de frein moteur.

5. Dispositif pour réguler la dynamique longitudinale d'un véhicule automobile comportant
un dispositif (1) de régulation de la dynamique longitudinale, au côté entrée duquel sont envoyées des données concernant l'accélération longitudinale de consigne ($a_{soll}$) et l'état de conduite réel et qui délivre, sur sa sortie, un signal de réglage ($U_a$) de la chaîne motrice, et dans lequel
le dispositif (1) de régulation de la dynamique longitudinale comprend un premier étage (2) servant à déterminer des valeurs, contenues dans le régulateur, pour l'accélération longitudinale de consigne ($a_{si}$) et la vitesse longitudinale de consigne ($v_{si}$) et un second étage (3) branché en aval de ce dernier,
**caractérisé en ce que** le second étage comprend une unité (9) de champ de caractéristiques inverse de la dynamique longitudinale, qui détermine un signal de réglage de consigne ($U_{as}$) de la

chaîne motrice à partir des valeurs ($v_{si}$) de la vitesse longitudinale de consigne et des valeurs ($a_{si}$) de l'accélération longitudinale de consigne, envoyées, qui sont contenues dans le régulateur, et à partir de données de l'état de déplacement réel envoyées, sur la base d'un champ de caractéristiques inverse de la dynamique longitudinale du véhicule, ainsi que des unités (10, 11, 12) branchées en aval, qui dérivent du signal de réglage de consigne ($U_{as}$) de la chaîne motrice le signal de réglage ($U_a$) de la chaîne motrice.

6. Dispositif selon la revendication 5, **caractérisé en outre en ce qu'**en aval de l'unité (9) du champ de caractéristiques inverse de la dynamique longitudinale du véhicule est branchée une unité (10) servant à déterminer le fonctionnement en traction/en poussée, qui à partir du signal de réglage de consigne envoyé ($U_{as}$) de la chaîne motrice et d'un signal de réglage renvoyé ($U_b$) de l'installation de freinage, détermine un signal de réglage de consigne modifié ($U_{as}$) de la chaîne motrice et un signal binaire ($S_b$) de commande de l'installation de freinage, en fonction d'une comparaison entre le signal de réglage de consigne ($U_{as}$) de la chaîne motrice et un signal de réglage minimal ($U_{amin}$) de la chaîne motrice, d'une comparaison entre le signal de réglage de l'installation de freinage et d'un signal de réglage minimal ($U_{bmin}$) de l'installation de freinage, ainsi que de la valeur précédente du signal binaire de commande de l'installation de freinage.

Fig. 1

Fig. 2

Fig. 3

$U_{as}, U_b$

13

JA     $S_b = 0$ ?     NEIN

14

JA     $U_{as} < U_{amin}$ ?     NEIN

15

JA     $U_b < U_{bmin}$ ?     NEIN

16

$S_b = 1$

$U_{asm} = U_{amin}$

17

$S_b = 0$

$U_{asm} = U_{as}$

18

$S_b = 0$

$U_{asm} = U_{as}$

19

$S_b = 1$

$U_{asm} = U_{amin}$

Fig. 4